# EUROPEAN PATENT SPECIFICATION

(11) **EP 0 707 879 B1**
(45) Date of publication and mention of the grant of the patent: **02.12.1998**
(21) Application number: 95307068.7
(22) Date of filing: 05.10.1995
(51) Int. Cl.: B01D 29/33, B01D 46/24

(54) **Filtration apparatus**
Filterapparat
Appareil de filtration

(30) Priority: 19.10.1994 GB 9421083
(43) Date of publication of application: 24.04.1996
(73) Proprietor: FOSECO INTERNATIONAL LIMITED, Nechells Birmingham B7 5JR (GB)
(72) Inventor: Bartle, Michael J., West Chiltingon, West Sussex TH20 2RX (GB)
(74) Representative: Eyles, Winifred Joyce

(56) References cited:
- EP-A- 0 482 396
- DE-U- 9 014 198
- DE-U- 9 017 238

## Description

This invention relates to filtration apparatus and, more particularly, to a means to hold rigid filter tubes in their desired use position.

Filtration apparatus is known in which substantially rigid filter tubes e.g. of ceramic material, are usually suspended vertically from a support plate. The tubes usually have an annular flange or collar at one end and they are each placed through a hole in the support plate so as to be suspended by their flanges. In order to hold the tubes in the desired positions, a top plate may be placed over the exposed flanges and the top plate and support plate bolted together at suitable intervals with spacers between the plates whereby the collar of each tube is trapped between the two plates. Reference is also made to DE-U-90 17 238 and DE-U-90 14 238, which teach alternative methods of rigidly fixing the flange on the support plate.

A filtration apparatus of this type may contain a large number of filter tubes, for example from 36 to over 1000. Such an apparatus has a number of disadvantages. For example, if one filter tube fails in service, it is necessary to unbolt the entire top plate in order to remove and replace the faulty tube. Moreover, the means by which the tubes are held in place may be inadequate and may in certain circumstances lead to possible fracture of the tubes.

It is an object of the present invention, therefore, to provide an improved means of locating and holding filter tubes in a support plate.

Accordingly, in one aspect, the invention provides a filtration apparatus comprising a support plate having a plurality of apertures each to receive a filter tube, a plurality of annular collars, each collar being divided by a step into two portions, a first portion of size to pass through an aperture in the plate and a second portion of a size not to pass through an aperture in the plate, each collar thereby being positionable to sit in an aperture in the plate with the exterior of its step contacting the plate around the aperture, each collar having a central through passageway to receive a filter tube with an annular flange adjacent one end, whereby each tube may be positioned to extend through the support plate with its flange in engagement with or adjacent the interior of the step of its respective collar, means to attach each collar to the support plate and means to hold each tube securely in its respective collar.

The invention also provides in another aspect an annular collar suitable for use in the aforesaid filtration apparatus, the collar being divided by a step into two portions, a first portion of smaller external and internal dimensions than a second portion, the collar having means for attachment to a support plate around an aperture in the support plate through which its first portion can be fitted, and means attachable to the second portion to hold securely in the collar the flange of a flanged filter tube extending through the collar.

The invention is particularly applicable to use with substantially rigid ceramic filter tubes but is not limited to such use. Thus it may be used with any suitable filter tubes e.g. of porous metal or plastics material. Where a ceramic tube is used it is preferably a composite ceramic fibre product.

Similarly the stepped collar may be formed of ceramic material, metal, e.g. aluminium, or plastics material.

Although the invention is particularly useful for filtration apparatus in which the filter tubes are suspended vertically from a support plate and are clamped at their upper ends, it is not limited to such use. Thus the tubes may be arranged to extend horizontally and they may, if desired, be supported at both ends.

The means to attach the collar to the support plate may be, for example, a series of integrally-formed lugs, e.g. four equi-spaced lugs, on the exterior of the collar. The lugs may be formed on the second portion of the collar adjacent its step and may be apertured whereby they can be attached to the support plate by suitable bolts.

The means to hold the filter tube securely in position in the collar may be, for example, an apertured cover plate to sit on top of the tube and a spring circlip to be fitted under a lip at the edge of the second portion of the collar to compress the cover plate and tube against the step of the collar.

Suitable sealing washers may be incorporated as required between the individual items of the assembled apparatus. Venturi devices may also be positioned in the filter tubes as is conventional practice.

The collar and the filter tube may be of conventional circular cross-section but, in another preferred embodiment of the invention, they are of non-circular cross-section. For example, their sections may be of matching corrugated outline, e.g. in the form of a toothed wheel, or of oval, rectangular or other section. By this means the locking effect of the tubes in their collars can be further enhanced.

It is not essential that a plurality of individual collars be provided. If desired, an integral block of the appropriate number of collars may be formed, e.g. by casting or moulding.

The invention provides a filtration apparatus of improved durability and operational flexibility. Filter tubes are more securely held in their support plate and, for example, a rigid ceramic filter tube is less likely to fracture. If a single tube fails in use, it can readily be replaced by releasing its securing means including those securing its collar to the support plate, removing the failed tube from the assembly and inserting a new tube.

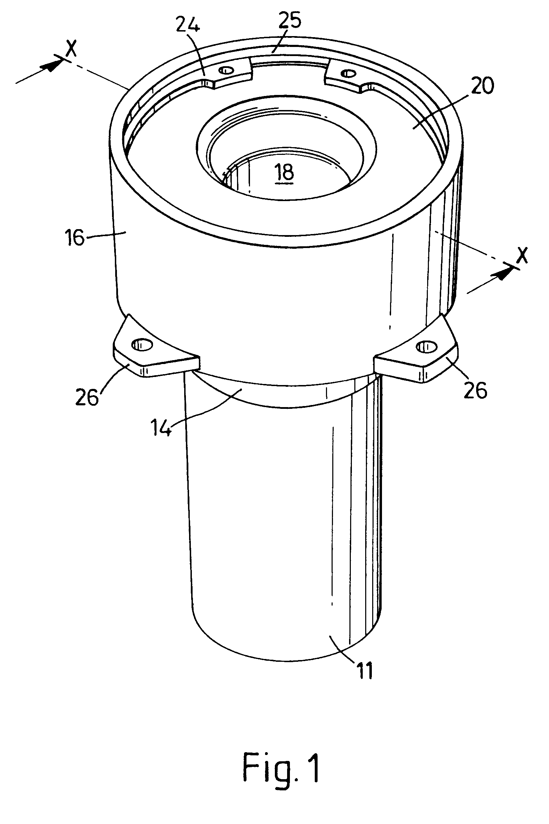

Specific embodiments of the invention will now be described by way of example only with reference to the accompanying drawings in which:-
Figure 1 is a perspective view of a stepped collar of the invention containing a filter tube;

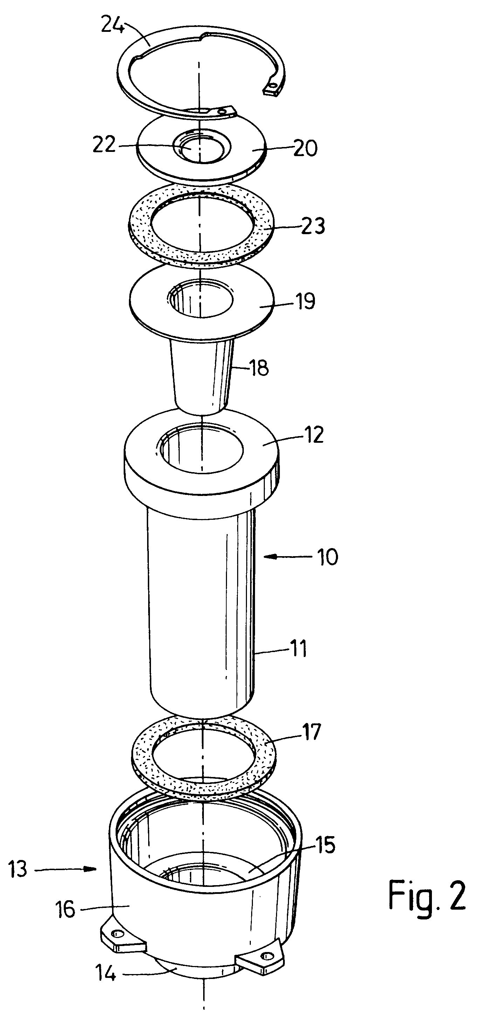

Figure 2 is an exploded perspective view of the assembly of Figure 1; and

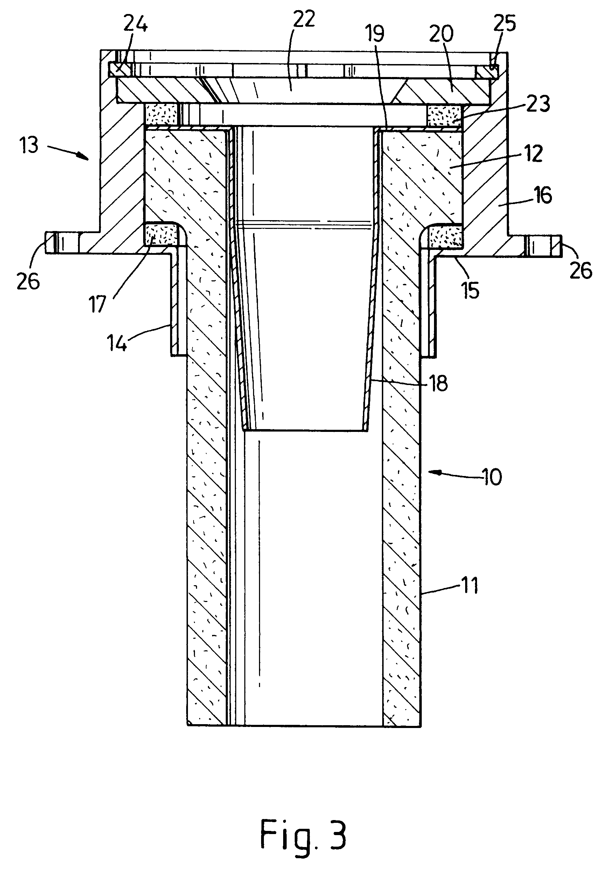

Figure 3 is a section on line X-X of Figure 1.

In the drawings, a ceramic filter tube 10 has an elongated tubular filter body portion 11 and a peripheral flange 12 at one end. A stepped collar 13 of the invention has a first portion 14 separated by a step 15 from a second portion 16.

Body portion 11 of tube 10 is fitted to extend through collar 13 until its flange 12 meets a sealing gasket 17 placed on the interior surface of step 15 in the collar.

A tapered venturi tube 18 with a flange 19 is fitted inside the flanged end of filter tube 10 so that flange 19 of the venturi tube rests on flange 12 of the filter tube.

A top plate 20, with a central aperture 22 to allow passage of filtered gas through the filter tube wall, up the interior of the tube and out through aperture 22, is fitted on top of flange 19 of the venturi tube 18. A sealing gasket 23 is positioned between plate 20 and flange 19.

The assembly is then tightly pressed and held together by fitting a spring circlip 24 on top of plate 20 and underneath peripheral lip 25 of the second portion 16 of collar 13.

The second portion 16 of collar 13 has four integrally formed equi-spaced lugs 26 (two only shown) adjacent its step 15. Each lug has an aperture by means of which the collar may be bolted to a filter tube support plate (not shown).

As indicated above, a multiplicity of filter tubes may be securely fitted into a single support plate by the means of the invention.

## Claims

1. A filtration apparatus comprising a support plate having a plurality of apertures each to receive a filter tube (10) with an annular flange (12) at one end, characterised by a plurality of annular collars (13), each collar being divided by a step (15) into two portions (14, 16), the first portion (14) of which is of size to pass through an aperture in the plate and the second portion (16) of which is of size not to pass through an aperture in the plate, each collar (13) thereby being positionable to sit in an aperture in the plate with the exterior of its step (15) contacting the plate around the aperture, each collar (13) having a central through passageway to receive one of said filter tubes (10), whereby each tube (10) may be positioned to extend through the support plate with its flange (12) in engagement with or adjacent the interior of the step (15) of its respective collar (13), and means (26) to attach each collar (13) to the support plate and means (24, 25) to hold each tube (10) securely in its respective collar (13).

2. A filtration apparatus according to Claim 1, characterised in that the means to attach the collar (13) to the support plate is a series of integrally-formed apertured lugs (26) on the exterior of the collar.

3. A filtration apparatus according to Claim 1 or 2, characterised in that the means to hold the filter tube (10) securely in its collar (13) comprises an apertured cover plate (20) to sit on the flanged end (12) of the tube, a lip (25) at the edge of the second portion (16) of the collar and a spring circlip (24) to fit under the lip (25) to compress the cover plate (20) and tube flange (12) against the step (15) of the collar.

4. A filtration apparatus according to Claim 1, 2 or 3, characterised in that the collars (13) and filter tubes (10) are of corrugated outline in transverse cross-section.

5. A filtration apparatus according to any preceding claim, characterised in that the filter tubes (10) are suspended vertically from the support plate and are clamped at their upper ends (12).

6. A filtration apparatus according to any preceding claim, characterised in that the collars (13) are formed as an integral block.

7. An annular collar for use in a filtration apparatus according to Claim 1, characterised in that the collar (13) is divided by a step (15) into two portions (14, 16), the first portion (14) of which is of smaller external and internal dimensions than the second portion (16), the collar having means (26) for attachment to a support plate around an aperture in the support plate through which its first portion (14) can be fitted, means (20, 24) being attachable to the second portion (16) whereby a flange (12) of a flanged filter tube (10) extending through the collar may be secured to the collar.

8. An annular collar according to Claim 7, characterised in that the second portion (16) of the collar has an annular integral lip (25) to secure the attachment means (20, 24).

9. An annular collar according to Claim 7 or 8, characterised in that it is made of ceramic, metal or plastics material.

10. An annular collar according to Claim 7, 8 or 9, which is formed in an integral block with a plurality of similar collars.

11. A kit of parts for a filtration apparatus, the kit comprising a collar (13) according to Claim 7 and means (20, 24) to secure a flanged filter tube into a support plate via the collar.

12. A kit of parts according to Claim 11, characterised in that it additionally includes a filter tube.

13. A kit of parts according to Claim 12, characterised in that it additionally includes a venturi tube to be positioned in the filter tube.

## Patentansprüche

1. Filtervorrichtung mit einer Trägerplatte, die eine Mehrzahl von Öffnungen jeweils zur Aufnahme eines Filterrohres (10) mit einem Ringflansch (12) an einem Ende aufweist, gekennzeichnet durch eine Mehrzahl von Ringkrägen (13), von denen jeder durch eine Stufe (15) in zwei Abschnitte (14, 16) aufgeteilt ist, wobei der erste Abschnitt (14) eine solche Größe aufweist, daß er durch eine Öffnung in der Platte hindurchgeführt werden kann, und der zweite Abschnitt (16) eine Größe aufweist, daß er nicht durch eine Öffnung in der Platte hindurchgeführt werden kann, und wobei jeder Kragen (13) dadurch derart positionierbar ist, daß er in einer Öffnung in der Platte sitzt und dabei das Äußere seiner Stufe (15) um die Öffnung herum in Berührung mit der Platte steht, und jeder Kragen (13) einen zentralen Durchgang für die Aufnahme eines der genannten Filterrohre (10) aufweist, wobei jedes Rohr (10) derart positioniert werden kann, daß es sich durch die Trägerplatte hindurch erstreckt und dabei sein Flansch (12) im Eingriff mit dem Inneren der Stufe (15) des entsprechenden Kragens (13) steht oder sich daneben befindet, sowie durch ein Mittel (26) zum Befestigen jedes Kragens (13) an der Trägerplatte und durch ein Mittel (24, 25) zum sicheren Halten jedes Rohres (10) in seinem entsprechenden Kragen (13).

2. Filtervorrichtung nach Anspruch 1, dadurch gekennzeichnet, daß das Mittel zum Befestigen des Kragens (13) an der Trägerplatte aus einer Reihe von einstückig geformten, durchlöcherten Ansätzen (26) auf der Außenseite des Kragens bestehen.

3. Vorrichtung nach Anspruch 1 oder 2, dadurch gekennzeichnet, daß, das Mittel zum sicheren Halten des Filterrohres (10) in seinem Kragen (13) eine durchlöcherte Abdeckplatte (20), die auf dem mit einem Flansch versehenen Ende (12) des Rohres sitzt, eine Lippe (25) am Rand des zweiten Abschnitts (16) des Kragens und einen Sprengring (24), der unter die Lippe (25) paßt, um die Deckplatte (20) und den Rohrflansch (12) gegen die Stufe (15) des Kragens zu pressen, aufweisen.

4. Filtervorrichtung nach Anspruch 1, 2 oder 3, dadurch gekennzeichnet, daß die Krägen (13) und die Filterrohre (10) im Querschnitt einen gewellten Umriß aufweisen.

5. Filtervorrichtung nach einem der vorstehenden Ansprüche, dadurch gekennzeichnet, daß die Filterrohre (10) von der Trägerplatte vertikal herabhängen und an ihren oberen Enden (12) festgeklemmt sind.

6. Filtervorrichtung nach einem der vorstehenden Ansprüche, dadurch gekennzeichnet, daß die Krägen (13) als einstückiger Block ausgebildet sind.

7. Ringkragen zur Verwendung in einer Filtervorrichtung nach Anspruch 1, dadurch gekennzeichnet, daß der Kragen (13) durch eine Stufe (15) in zwei Abschnitte (14, 16) aufgeteilt ist, von denen der erste Abschnitt (14) kleinere äußere und innere Abmessungen als der zweite Abschnitt (16) aufweist, wobei der Kragen mit einem Mittel (26) für eine Befestigung an einer Trägerplatte um eine Öffnung in der Trägerplatte herum ausgerüstet ist, durch die der erste Abschnitt (14) hindurchgeführt werden kann, sowie mit einem Mittel (20, 24) versehen ist, das an dem zweiten Abschnitt (16) befestigbar ist, wodurch ein Flansch (12) eines mit einem Flansch versehenen Filterrohres (10), das sich durch den Kragen hindurch erstreckt, an dem Kragen gesichert werden kann.

8. Ringkragen nach Anspruch 7, dadurch gekennzeichnet, daß der zweite Abschnitt (16) des Kragens eine ringförmige einstückige Lippe (25) zum Sichern des Befestigungsmittels (20, 24) aufweist.

9. Ringkragen nach Anspruch 7 oder 8, dadurch gekennzeichnet, daß, er aus keramischem Material, metallischem Material oder Kunststoffmaterial hergestellt ist.

10. Ringkragen nach Anspruch 7, 8 oder 9, der in Form eines einstückigen Blocks mit einer Mehrzahl von ähnlichen Krägen ausgebildet ist.

11. Teilesatz für eine Filtervorrichtung, mit einem Kragen (13) gemäß, Anspruch (7) und einem Mittel (20, 24) zum Sichern eines mit einem Flansch versehenen Filterrohres in einer Trägerplatte über den Kragen.

12. Teilesatz nach Anspruch 11, dadurch gekennzeichnet, daß er zusätzlich ein Filterrohr enthält.

13. Teilesatz nach Anspruch 12, dadurch gekennzeichnet, daß er zusätzlich ein Venturirohr enthält, das in dem Filterrohr angeordnet wird.

## Revendications

1. Appareil de filtration comportant une plaque de support ayant plusieurs ouvertures, chacune destinée à recevoir un tube de filtre (10) ayant un rebord annulaire (12) à une première extrémité, caractérisé en ce qu'il comporte plusieurs colliers annulaires (13), chaque collier étant divisé en deux parties (14, 16) par une marche (15), dont la première partie (14) est dimensionnée pour passer à travers une ouverture de la plaque et dont la seconde partie (16) est dimensionnée pour ne pas passer a travers une ouverture de la plaque, chaque collier (13) pouvant ainsi être positionné pour être en appui dans une ouverture de la plaque, l'extérieur de sa marche (15) venant en contact avec la plaque autour de l'ouverture, chaque collier (13) ayant un passage traversant central destiné à recevoir un desdits tubes de filtre (10), de sorte que chaque tube (10) peut être positionné pour s'étendre à travers la plaque de support, son rebord (12) étant en contact avec l'intérieur de la marche (15) de son collier respectif (13) ou adjacent à celle-ci, et des moyens (26) pour fixer chaque collier (13) sur la plaque de support et des moyens (24, 25) pour maintenir chaque tube (10) de manière fixe dans son collier respectif (13).

2. Appareil de filtration selon la revendication 1, caractérisé en ce que les moyens pour fixer le collier (13) sur la plaque de support sont une série de pattes (26) munies d'ouvertures, formées en un seul bloc, situées sur l'extérieur du collier.

3. Appareil de filtration selon la revendication 1 ou 2, caractérisé en ce que les moyens pour maintenir le tube de filtre (10) de manière fixe dans son collier (13) comportent une plaque de recouvrement (20) munie d'une ouverture destinée à être en appui sur l'extrémité munie d'un rebord (12) du tube, une lèvre (25) au niveau du bord de la seconde partie (16) du collier et un circlip élastique (24) destiné à être agencé sous la lèvre (25) pour comprimer la plaque de recouvrement (20) et le rebord de tube (12) contre la marche (15) du collier.

4. Appareil de filtration selon la revendication 1, 2 ou 3, caractérisé en ce que les colliers (13) et les tubes de filtre (10) ont un contour ondulé en coupe transversale.

5. Appareil de filtration selon l'une quelconque des revendications précédentes, caractérisé en ce que les tubes de filtre (10) sont suspendus verticalement à partir de la plaque de support et sont serrés à leur extrémité supérieure (12).

6. Appareil de filtration selon l'une quelconque des revendications précédentes, caractérisé en ce que les colliers (13) sont formés en un seul bloc.

7. Collier annulaire destiné à être utilisé dans un appareil de filtration selon la revendication 1, caractérisé en ce que le collier (13) est divisé en deux parties (14, 16) par une marche (15), dont la première partie (14) a des dimensions extérieure et intérieure plus petites que la seconde partie (16), le collier ayant des moyens (26) de fixation sur une plaque de support autour d'une ouverture de la plaque de support à travers laquelle peut être agencée sa première partie (14), des moyens (20, 24) pouvant être fixés sur la seconde partie (16) de sorte qu'un rebord (12) d'un tube de filtre muni d'un rebord (10) s'étendant à travers le collier peut être fixé sur le collier.

8. Collier annulaire selon la revendication 7, caractérisé en ce que la seconde partie (16) du collier a une lèvre en un seul bloc annulaire (25) destinée à fixer les moyens de fixation (20, 24).

9. Collier annulaire selon la revendication 7 ou 8, caractérisé en ce qu'il est constitué d'un matériau en céramique, de métal ou de matière plastique.

10. Collier annulaire selon la revendication 7, 8 ou 9, qui est formé en un seul bloc avec plusieurs colliers analogues.

11. Jeu de pièces pour appareil de filtration, le jeu comportant un collier (13) selon la revendication 7 et des moyens (20, 24) pour fixer un tube de filtre muni d'un rebord dans une plaque de support via le collier.

12. Jeu de pièces selon la revendication 11, caractérisé en ce qu'il comporte de plus un tube de filtre.

13. Jeu de pièces selon la revendication 12, caractérisé en ce qu'il comporte de plus un tube à venturi destiné à être positionné dans le tube de filtre.
